# EUROPEAN PATENT APPLICATION

(11) **EP 4 818 692 A1**
(43) Date of publication of application: **07.10.2026**
(21) Application number: 24897143.4
(22) Date of filing: 21.10.2024
(51) Int. Cl.: G01N 29/024

(54) **PHYSICAL AMOUNT MEASUREMENT SYSTEM**

(30) Priority: 28.11.2023 JP 2023200944
(71) Applicant: Panasonic Intellectual Property Management Co., Ltd., Kadoma-shi, Osaka 571-0057 (JP)
(72) Inventor: TAKAKURA, Yuya, Kadoma-shi, Osaka 571-0057 (JP); MATSUDA, Masataka, Kadoma-shi, Osaka 571-0057 (JP); MIYOSHI, Asako, Kadoma-shi, Osaka 571-0057 (JP); KONISHI, Ryohei, Kadoma-shi, Osaka 571-0057 (JP)
(74) Representative: SSM Sandmair
(86) International application number: PCT/JP2024/037420
(87) International publication number: WO 2025/115453

(57) **Abstract**

The problem to be overcome by the present disclosure is to measure the concentration of hydrogen accurately even in a high-humidity environment. A physical quantity measurement system (1) includes a flow channel, a pair of ultrasonic transducers (11, 12), and a concentration measurer (204). Gas mixtures including hydrogen and water vapor flow through the flow channel. The pair of ultrasonic transducers (11, 12) transmit and receive an ultrasonic wave and are arranged to cause the ultrasonic wave to cross the flow of the gas mixtures along the flow channel. The concentration measurer (204) measures a gas concentration that is a concentration of a gas included in the gas mixtures which is different from the water vapor. The concentration measurer (204) calculates the gas concentration using a pressure of the gas mixtures, a density of the gas mixtures, a temperature of the gas mixtures, and a propagation time of the ultrasonic wave which is obtained by causing the pair of ultrasonic transducers (11, 12) to transmit and receive the ultrasonic wave.

## Description

### Technical Field

The present disclosure generally relates to a physical quantity measurement system, and more particularly relates to a physical quantity measurement system, of which the target of measurement is gas mixtures flowing through a flow channel.

### Background Art

A measuring method using an ultrasonic wave has been known in the art as a method for measuring the concentration of a mixed gas (gas mixtures) including hydrogen (see, for example, Patent Literature 1).

A device disclosed in Patent Literature 1 obtains, first, a speed of sound in a mixed gas based on a measured value of the propagation time of an ultrasonic wave. Next, the device obtains an average molecular weight of the mixed gas using the speed of sound and a measured temperature. Thereafter, the device obtains the concentration of hydrogen, which is one of a plurality of component gases, using respective molecular weights of the plurality of component gases that are already known.

Such a device (physical quantity measurement system) for measuring the concentration of a mixed gas including hydrogen is sometimes exposed to a high-humidity environment. Patent Literature 1 fails to teach how to calculate the concentration of hydrogen in such a high-humidity environment, and therefore, may be unable to accurately measure the concentration of hydrogen included in the mixed gas in a high-humidity condition.

### Citation List

### Patent Literature

Patent Literature 1: JP 2010-91489 A

### Summary of Invention

In view of the foregoing background, it is therefore an object of the present disclosure to provide a physical quantity measurement system having the ability to measure the concentration of hydrogen accurately even in a high-humidity environment.

A physical quantity measurement system according to an aspect of the present disclosure includes a flow channel, a pair of ultrasonic transducers, and a concentration measurer. Gas mixtures including hydrogen and water vapor flow through the flow channel. The pair of ultrasonic transducers transmit and receive an ultrasonic wave and are arranged to cause the ultrasonic wave to cross the flow of the gas mixtures along the flow channel. The concentration measurer measures a gas concentration as a concentration of a gas included in the gas mixtures which is different from the water vapor. The concentration measurer calculates the gas concentration using a pressure of the gas mixtures, a density of the gas mixtures, a temperature of the gas mixtures, and a propagation time of the ultrasonic wave which is obtained by causing the pair of ultrasonic transducers to transmit and receive the ultrasonic wave.

### Brief Description of Drawings

[FIG. 1] FIG. 1 is a block diagram illustrating a configuration for a physical quantity measurement system according to an embodiment;
[FIG. 2] FIG. 2 is a system diagram illustrating a configuration for the physical quantity measurement system;
[FIG. 3] FIG. 3 is a cross-sectional view, taken along an X-Y plane, of a flow channel body included in the physical quantity measurement system;
[FIG. 4] FIG. 4 is a flowchart showing how the physical quantity measurement system operates;
[FIG. 5] FIG. 5 is a flowchart showing a procedure of concentration measurement processing to be performed by the physical quantity measurement system;
[FIG. 6] FIG. 6 is a flowchart showing a procedure of speed of sound calculation processing to be performed as a part of the concentration measurement processing;
[FIG. 7] FIG. 7 is a flowchart showing a procedure of concentration calculation processing to be performed as another part of the concentration measurement processing;
[FIG. 8] FIG. 8 is a flowchart showing a procedure of flow rate measurement processing to be performed by the physical quantity measurement system; and
[FIG. 9] FIG. 9 is a system diagram illustrating a configuration for a physical quantity measurement system according to a fourth variation.

### Description of Embodiments

Note that the embodiment and its variations to be described below are only an exemplary one of various embodiments of the present disclosure and its variations and should not be construed as limiting the scope of the present disclosure. Rather, the exemplary embodiment and its variations may be readily modified in various manners depending on a design choice or any other factor without departing from a true spirit and scope of the present disclosure.

### (Embodiment)

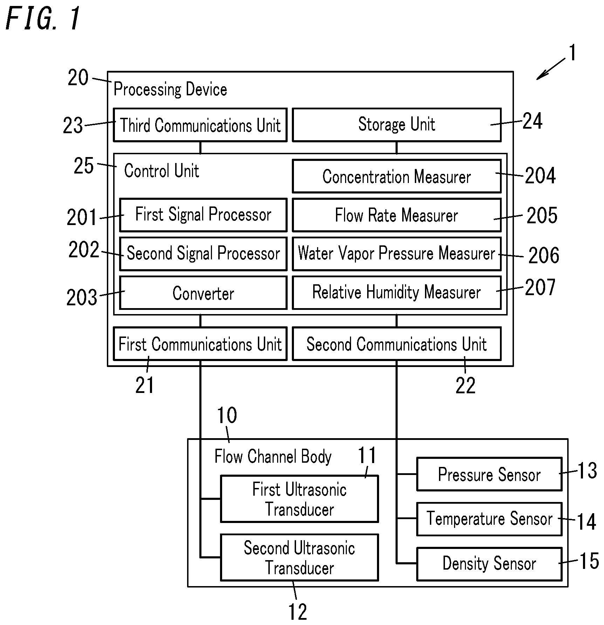

A physical quantity measurement system 1 according to an embodiment will be described with reference to FIGS. 1-8.

### (1) Overview

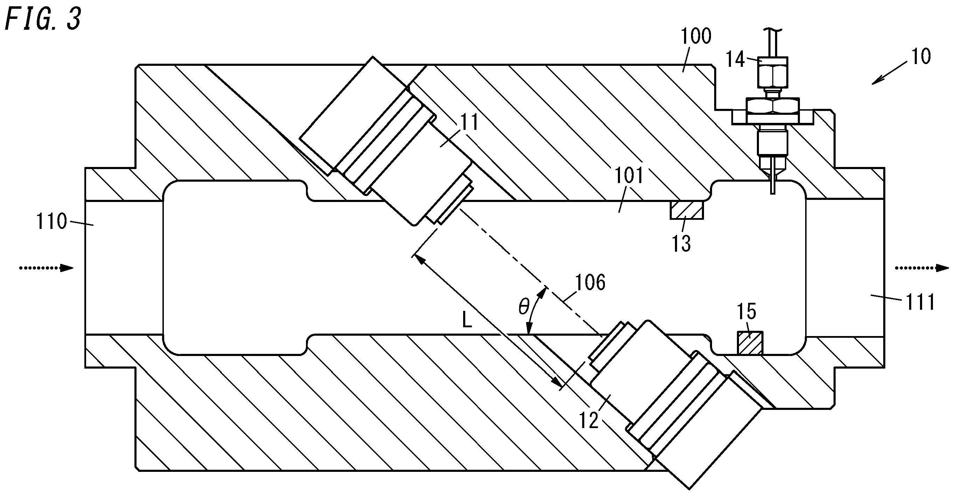

A physical quantity measurement system 1 according to this embodiment is a system for measuring, in gas mixtures including multiple types of gases flowing through a flow channel 101 (refer to FIG. 3), the concentration of at least one of the gases included in the gas mixtures which are different from the water vapor. For example, gas mixtures including hydrogen, nitrogen, and water vapor flow through the flow channel 101.

A physical quantity measurement system 1 according to this embodiment includes a flow channel 101, a pair of ultrasonic transducers 11, 12, a pressure sensor 13, a temperature sensor 14, a density sensor 15, a concentration measurer 204, and a flow rate measurer 205 as shown in FIG. 1. Gas mixtures including hydrogen and water vapor flow through the flow channel 101. The pair of ultrasonic transducers 11, 12 transmit and receive an ultrasonic wave and are arranged to cause the ultrasonic wave to cross the flow of the gas mixtures along the flow channel 101. The pressure sensor 13 measures the pressure of the gas mixtures. The temperature sensor 14 measures the temperature of the gas mixtures. The density sensor 15 measures the density of the gas mixtures. The concentration measurer 204 measures a gas concentration that is the concentration of a gas included in the gas mixtures which is different from the water vapor. The concentration measurer 204 calculates the gas concentration using the pressure of the gas mixtures as measured by the pressure sensor 13, the density measured by the density sensor 15, the temperature measured by the temperature sensor 14, and the propagation time of the ultrasonic wave which is obtained by causing the pair of ultrasonic transducers 11, 12 to transmit and receive the ultrasonic wave.

This configuration allows the hydrogen concentration to be measured accurately even in a high-humidity environment.

### (2) Configuration

A configuration for the physical quantity measurement system 1 will now be described in detail with reference to FIGS. 1-3.

The physical quantity measurement system 1 includes a flow channel body 10 and a processing device 20 as shown in FIG. 1. The physical quantity measurement system 1 measures, as physical quantities, the concentration of hydrogen (hydrogen concentration) included in gas mixtures flowing through the flow channel body 10, the flow rate of the gas mixtures, and a relative humidity. The physical quantity measurement system 1 further measures, as physical quantities, the water vapor pressure of water vapor included in the gas mixtures and the concentration of the water vapor (water vapor concentration). In this case, the concentration measured by the physical quantity measurement system 1 may be, for example, a volume concentration.

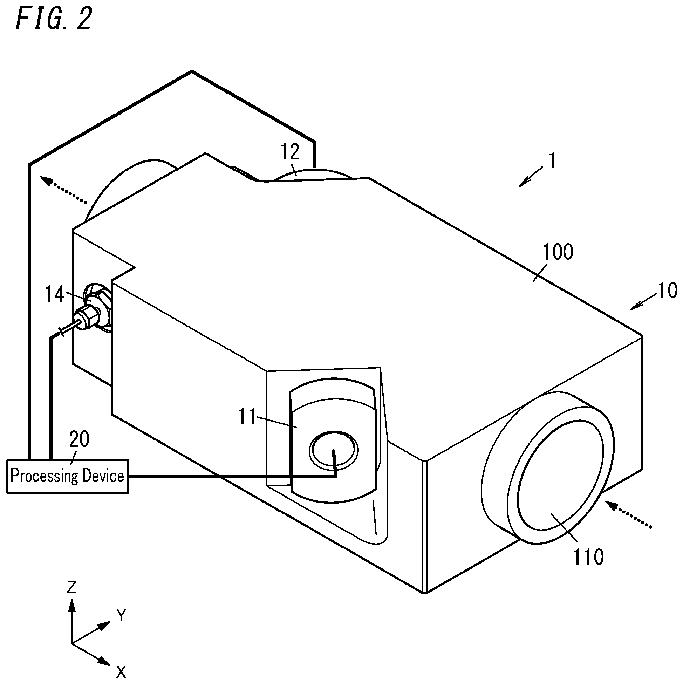

X-, Y-, and Z-axes are herein defined with respect to the flow channel body 10 (refer to FIG. 2). Specifically, the X-axis is herein defined to be an axis along the longitudinal axis of the flow channel body 10, i.e., an axis defined along a direction in which the gas mixtures flow. The Y-axis is an axis which intersects at right angles with the X-axis, and may be, for example, an axis defined along the depth of the flow channel body 10. The Z-axis is an axis which intersects at right angles with both of the X- and Y-axes and may be, for example, an axis defined along the height of the flow channel body 10. FIG. 3 is a cross-sectional view, taken along an X-Y plane, of the flow channel body 10. Note that in FIG. 3, none of the cross sections of the pair of ultrasonic transducers 11, 12 and the temperature sensor 14 are shown.

### (2.1) Flow channel body

The gas mixtures including hydrogen, nitrogen, and water vapor flow through the flow channel body 10. The second gas may be nitrogen, for example. The flow channel body 10 includes a pair of ultrasonic transducers 11, 12, a pressure sensor 13, a temperature sensor 14, and a density sensor 15 as shown in FIG. 1. The flow channel body 10 further includes a body 100 as shown in FIG. 2. Note that in the following description, the ultrasonic transducer 11 will be hereinafter sometimes referred to as a "first ultrasonic transducer 11" and the ultrasonic transducer 12 will be hereinafter sometimes referred to as a "second ultrasonic transducer 12."

The body 100 is formed in a substantially rectangular parallelepiped shape. A flow channel 101, through which a fluid under measurement (gas mixtures) such as a mixed gas including hydrogen flows, is provided to run through the middle of the body 100 (refer to FIG. 3). A first opening 110 and a second opening 111 are respectively provided at both longitudinal ends of the body 100. Specifically, the first opening 110 and the second opening 111 are respectively provided through both side surfaces, facing each other along the longitudinal axis, of the body 100. The first opening 110 and the second opening 111 are connected to each other via the flow channel 101. The gas mixtures flow in through the first opening 110, pass through the flow channel 101, and flow out through the second opening 111.

The pair of ultrasonic transducers 11, 12 transmit and receive an ultrasonic wave. The pair of ultrasonic transducers 11, 12 are arranged to cause the ultrasonic wave to cross the flow of the gas mixtures along the flow channel 101. Specifically, the first ultrasonic transducer 11 transmits the ultrasonic wave toward the second ultrasonic transducer 12. In addition, the first ultrasonic transducer 11 also receives the ultrasonic wave transmitted from the second ultrasonic transducer 12. In the same way, the second ultrasonic transducer 12 transmits the ultrasonic wave toward the first ultrasonic transducer 11. In addition, the second ultrasonic transducer 12 also receives the ultrasonic wave transmitted from the first ultrasonic transducer 11. The first ultrasonic transducer 11 and the second ultrasonic transducer 12 are respectively arranged at both lateral ends of the flow channel 101 and at upstream and downstream ends to cause an ultrasonic signal to cross the flow of the gas mixtures. The first ultrasonic transducer 11 and the second ultrasonic transducer 12 are also respectively arranged on both side surfaces, facing each other along the lateral axis, of the flow channel 101 and at upstream and downstream ends to cause the ultrasonic signal to cross the flow of the gas mixtures. Specifically, the first ultrasonic transducer 11 and the second ultrasonic transducer 12 are arranged at upstream and downstream ends, respectively, to face each other (refer to FIGS. 2 and 3). In the direction in which the first ultrasonic transducer 11 and the second ultrasonic transducer 12 face each other, an ultrasonic wave propagation path 106 for propagating the ultrasonic wave therethrough is formed (refer to FIG. 3). The ultrasonic wave propagation path 106 forms a tilt angle θ with respect to the flow channel 101 (refer to FIG. 3).

The pressure sensor 13 measures the pressure of the gas mixtures flowing through the flow channel 101.

The temperature sensor 14 may be a thermocouple, for example. The temperature sensor 14 measures the temperature of the gas mixtures flowing through the flow channel 101.

The density sensor 15 may be, for example, a vibrating tube densimeter. The density sensor 15 measures the density of the gas mixtures flowing through the flow channel 101.

### (2.2) Processing device

The processing device 20 includes a first communications unit 21, a second communications unit 22, a third communications unit 23, a storage unit 24, and a control unit 25 as shown in FIG. 1.

The processing device 20 includes a computer system including one or more processors and a memory, for example. The computer system performs the functions of the control unit 25 by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The first communications unit 21 is a communications interface for communicating with the first ultrasonic transducer 11 and the second ultrasonic transducer 12. The second communications unit 22 is a communications interface for communicating with the pressure sensor 13, the temperature sensor 14, and the density sensor 15. The third communications unit 23 is a communications interface for communicating with, for example, a user device (not shown). The user device is a device which includes a display unit such as a liquid crystal display to notify the user of, for example, the result of measurement obtained by the physical quantity measurement system 1.

The storage unit 24 may be implemented as a device selected from the group consisting of, for example, a read-only memory (ROM), a random-access memory (RAM), and an electrically erasable programmable read-only memory (EEPROM). The storage unit 24 stores information for use to measure the physical quantity.

The control unit 25 includes a first signal processor 201, a second signal processor 202, a converter 203, a concentration measurer 204, a flow rate measurer 205, a water vapor pressure measurer 206, and a relative humidity measurer 207 as shown in FIG. 1.

The first signal processor 201 performs processing concerning communications between the first ultrasonic transducer 11 and the second ultrasonic transducer 12.

For example, when an ultrasonic wave is going to be transmitted from the first ultrasonic transducer 11 to the second ultrasonic transducer 12, the first signal processor 201 outputs a signal, instructing the first ultrasonic transducer 11 to transmit the ultrasonic wave, to the first ultrasonic transducer 11 via the first communications unit 21. When an ultrasonic wave is going to be transmitted from the second ultrasonic transducer 12 to the first ultrasonic transducer 11, the first signal processor 201 outputs a signal, instructing the second ultrasonic transducer 12 to transmit the ultrasonic wave, to the second ultrasonic transducer 12 via the first communications unit 21.

In addition, the first signal processor 201 also measures a first propagation time tᵤₚ (i.e., the propagation time of the ultrasonic wave in the forward direction) of the ultrasonic wave transmitted from the first ultrasonic transducer 11 to the second ultrasonic transducer 12. Specifically, the first signal processor 201 measures the first propagation time tᵤₚ based on a time when the ultrasonic wave is transmitted from the first ultrasonic transducer 11 and a time when the ultrasonic wave transmitted from the first ultrasonic transducer 11 is received at the second ultrasonic transducer 12.

Furthermore, the first signal processor 201 further measures a second propagation time t_{dw} (the propagation time of the ultrasonic wave in the backward direction) of the ultrasonic wave transmitted from the second ultrasonic transducer 12 to the first ultrasonic transducer 11. Specifically, the first signal processor 201 measures the second propagation time t_{dw} based on a time when the ultrasonic wave is transmitted from the second ultrasonic transducer 12 and a time when the ultrasonic wave transmitted from the second ultrasonic transducer 12 is received at the first ultrasonic transducer 11.

The first signal processor 201 calculates, as a propagation time t, an average value of the first propagation time tᵤₚ and the second propagation time t_{dw}.

The second signal processor 202 receives the output signals of the respective sensors and subjects the signals thus received to predetermined processing. On receiving the output signal of the pressure sensor 13, the second signal processor 202 subjects the signal thus received to predetermined signal processing to obtain the pressure P measured by the pressure sensor 13. On receiving the output signal of the temperature sensor 14, the second signal processor 202 subjects the signal thus received to predetermined signal processing to obtain the temperature T measured by the temperature sensor 14. On receiving the output signal of the density sensor 15, the second signal processor 202 subjects the signal thus received to predetermined signal processing to obtain the density ρ measured by the density sensor 15.

The converter 203 converts the density ρ thus obtained into a standard density ρ₀ by the following Mathematical Expression 1 using the density ρ, temperature T, and pressure P that have been obtained by the second signal processor 202. That is to say, the converter 203 converts the density ρ measured by the density sensor 15 into a standard density ρ₀ which is the density of the gas mixtures in a standard condition. In the following Mathematical Expression 1, P₀ is the pressure (i.e., a reference pressure) of the gas in the standard condition and T₀ is the temperature (i.e., a reference temperature) of the gas in the standard condition. The converter 203 converts the density ρ into the standard density ρ₀ by substituting the density ρ, temperature T, and pressure P thus obtained, the reference pressure P₀, and the reference temperature T₀ into the middle side of the following Mathematical Expression 1. In this case, the reference pressure P₀ and the reference temperature T₀ are stored in advance in the storage unit 24. Also, the standard condition of the gas herein refers to a condition at 20°C and 1 atm. Furthermore, in the following Mathematical Expression 1, "ρ₁" is the density in the standard condition of hydrogen included in the gas mixtures, "ρ₂" is the density in the standard condition of nitrogen included in the gas mixtures, and "ρ_{w}" is the density of water vapor included in the gas mixtures. Furthermore, in Mathematical Expression 1, "x" is the concentration of hydrogen and "x_{w}" is the concentration of water vapor. The density ρ₁ of hydrogen, the density ρ₂ of nitrogen, and the density ρ_{w} of water vapor are stored in advance in the storage unit 24. [Mathematical Expression 1] ${ρ}_{0} = ρ \frac{{P}_{0} T}{{PT}_{0}} = {xρ}_{1} + \left(1-x-{x}_{w}\right) {ρ}_{2} + {x}_{w} {ρ}_{w}$

The concentration measurer 204 measures a gas concentration that is the concentration of a gas included in the gas mixtures which is different from water vapor. For example, the concentration measurer 204 measures the concentration x of hydrogen (hydrogen concentration) as the gas concentration. Specifically, the concentration measurer 204 calculates the gas concentration (e.g., the hydrogen concentration x) using the pressure P of the gas mixtures as measured by the pressure sensor 13, the density ρ measured by the density sensor 15, the temperature T measured by the temperature sensor 14, and the propagation time t of the ultrasonic wave obtained by causing the pair of ultrasonic transducers 11, 12 to transmit and receive the ultrasonic wave. More specifically, the concentration measurer 204 calculates the gas concentration (e.g., the hydrogen concentration x) using the standard density ρ₀ converted by the 203 and the propagation time t of the ultrasonic wave.

The concentration measurer 204 calculates a water vapor concentration x_{w}, which is the concentration of water vapor to the gas mixtures, using the pressure P of the gas mixtures that has been measured by the pressure sensor 13, the density ρ measured by the density sensor 15, the temperature T measured by the temperature sensor 14, and the gas concentration (e.g., the hydrogen concentration x).

In this case, the following Mathematical Expression 2 is derived by solving Mathematical Expression 1 with respect to x_{w}: [Mathematical Expression 2] ${x}_{w} = \frac{ρ \frac{{P}_{0} T}{{PT}_{0}} - {xρ}_{1} - \left(1-x\right) {ρ}_{2}}{{ρ}_{w} - {ρ}_{2}} = \frac{{ρ}_{0} - {xρ}_{1} - \left(1-x\right) {ρ}_{2}}{{ρ}_{w} - {ρ}_{2}}$

The following Mathematical Expression 3 is satisfied with respect to the speed of sound c of the gas mixtures: [Mathematical Expression 3] ${c}^{2} = \frac{{L}^{2}}{{t}^{2}} = \frac{γRT}{M} = \frac{\frac{{xc}_{p 1} + \left(1-x-{x}_{w}\right) {c}_{p 2} + {x}_{w} {c}_{pw}}{{xc}_{v 1} + \left(1-x-{x}_{w}\right) {c}_{v 2} + {x}_{w} {c}_{vw}} RT}{{xM}_{1} + \left(1-x-{x}_{w}\right) {M}_{2} + {x}_{w} {M}_{w}}$

In Mathematical Expression 3, "t" is the propagation time of the ultrasonic wave, "L" is the gap distance between the pair of ultrasonic transducers 11, 12, and "γ" is a specific heat ratio of the gas mixtures which satisfies the relational expression "γ = cₚ/cᵥ" where "cₚ" is a molar specific heat at constant pressure and "cᵥ" is a molar specific heat at constant volume. Also, in Mathematical Expression 2: "M" is a molecular weight; "R" is a gas constant; "M₁" is the molecular weight of hydrogen (i.e., a first molecular weight); "cₚ₁" is the molar specific heat at constant pressure of hydrogen (first molar specific heat at constant pressure); "cᵥ₁" is the molar specific heat at constant volume of hydrogen (first molar specific heat at constant volume); "M₂" is the molecular weight of nitrogen (i.e., a second molecular weight); "cₚ₂" is the molar specific heat at constant pressure of nitrogen (second molar specific heat at constant pressure); "cᵥ₂" is the molar specific heat at constant volume of nitrogen (second molar specific heat at constant volume); "M_{w}" is the molecular weight of water vapor (i.e., a third molecular weight); "c_{pw}" is the molar specific heat at constant pressure of water vapor (third molar specific heat at constant pressure); and "c_{vw}" is the molar specific heat at constant volume of water vapor (third molar specific heat at constant volume). The gap distance L between the pair of ultrasonic transducers 11, 12, the first molecular weight M₁, the first molar specific heat at constant pressure cₚ₁, the first molar specific heat at constant volume cᵥ₁, the second molecular weight M₂, the second molar specific heat at constant pressure cₚ₂, the second molar specific heat at constant volume cᵥ₂, the third molecular weight M_{w}, the third molar specific heat at constant pressure c_{pw}, and the third molar specific heat at constant volume c_{vw} are stored in advance in the storage unit 24.

The concentration measurer 204 calculates the hydrogen concentration x by Mathematical Expressions 1-3 using the pressure P measured by the pressure sensor 13, the temperature T measured by the temperature sensor 14, the density ρ of the gas mixtures as measured by the density sensor 15, and the propagation time t of the ultrasonic wave obtained by causing the pair of ultrasonic transducers to transmit and receive the ultrasonic wave. That is to say, the concentration measurer 204 calculates the hydrogen concentration x by Mathematical Expressions 2 and 3 using the standard density ρ₀ converted by the converter 203 and the propagation time t of the ultrasonic wave.

Furthermore, the concentration measurer 204 calculates a water vapor concentration x_{w} by Mathematical Expression 2 using the pressure P, the temperature T, the density ρ of the gas mixtures, and the hydrogen concentration x thus calculated. That is to say, the concentration measurer 204 calculates the water vapor concentration x_{w} by Mathematical Expression 2 using the standard density ρ₀ converted by the converter 203 and the hydrogen concentration x thus calculated. Alternatively, the concentration measurer 204 may calculate the water vapor concentration x_{w} by Mathematical Expression 3 using the hydrogen concentration x thus calculated.

Still alternatively, the concentration measurer 204 may calculate the water vapor concentration x_{w} first by Mathematical Expressions 2 and 3 using the standard density ρ₀ and the propagation time t of the ultrasonic wave, and then calculate the hydrogen concentration x by Mathematical Expression 2 using the standard density ρ₀ and the water vapor concentration x_{w} thus calculated. Yet alternatively, the concentration measurer 204 may calculate the water vapor concentration first and then calculate the hydrogen concentration x by Mathematical Expression 3 using the standard density ρ₀.

The flow rate measurer 205 measures, using a first propagation time tᵤₚ and a second propagation time t_{dw}, the flow rate of the gas mixtures flowing through the flow channel 101. The flow rate measurer 205 obtains a provisional flow rate Q₀ of the gas mixtures by the following Mathematical Expression 4. The provisional flow rate Q₀ is calculated by multiplying together a cross-sectional area S of the flow channel 101 and a flow velocity V. Also, based on the relationship between the flow velocity V, the length L of the ultrasonic wave propagation path 106 (i.e., the gap distance L between the first ultrasonic transducer 11 and the second ultrasonic transducer 12), the first propagation time tᵤₚ, the second propagation time t_{dw}, and the angle θ formed by the ultrasonic wave propagation path 106 with respect to the flow channel 101, "Q = SV" may be modified into the right side of the following Mathematical Expression 4. In this case, the cross-sectional area S of the flow channel 101 and the angle θ formed by the ultrasonic wave propagation path 106 with respect to the flow channel 101 are stored in advance in the storage unit 24. [Mathematical Expression 4] ${Q}_{0} = SV = \frac{SL}{2 cosθ} \left(\frac{1}{{t}_{up}}-\frac{1}{{t}_{dw}}\right)$

The flow rate measurer 205 calculates the provisional flow rate Q₀ of the gas mixtures by the Mathematical Expression 4 using, as pieces of information for use to measure the physical quantity, the gap distance L between the first ultrasonic transducer 11 and the second ultrasonic transducer 12, the angle θ formed by the ultrasonic wave propagation path 106 with respect to the flow channel 101, and the cross-sectional area S, all of which have been stored in advance in the storage unit 24, and the first propagation time tᵤₚ and second propagation time t_{dw} that have been calculated by the first signal processor 201.

The flow rate measurer 205 calculates a flow rate Q by the following Mathematical Expression 5 using the provisional flow rate Q₀ thus calculated. In the following Mathematical Expression 5, the coefficient Rₖ is a flow rate coefficient (corrected value) and is stored in advance in the storage unit 24. [Mathematical Expression 5] $Q = {R}_{k} {Q}_{0}$

The water vapor pressure measurer 206 measures the water vapor pressure P_{w} of water vapor using the water vapor concentration x_{w} and the pressure P of the gas mixtures. Specifically, the water vapor pressure measurer 206 calculates the water vapor pressure P_{w} of the water vapor by the following Mathematical Expression 6: [Mathematical Expression 6] ${P}_{w} = {Px}_{w}$

The relative humidity measurer 207 measures a relative humidity H of the gas mixtures based on the water vapor pressure P_{w} measured by the water vapor pressure measurer 206 and a saturated water vapor pressure according to the temperature T. Specifically, the relative humidity measurer 207 measures the relative humidity H of the gas mixtures by the following Mathematical Expression 7: [Mathematical Expression 7] $H = \frac{100 {P}_{w}}{0.61 \times {10}^{\frac{7.5 T}{237.3 + T}}}$

### (3) Operation

Now, it will be described how the physical quantity measurement system 1 operates.

### (3.1) Overview of operation

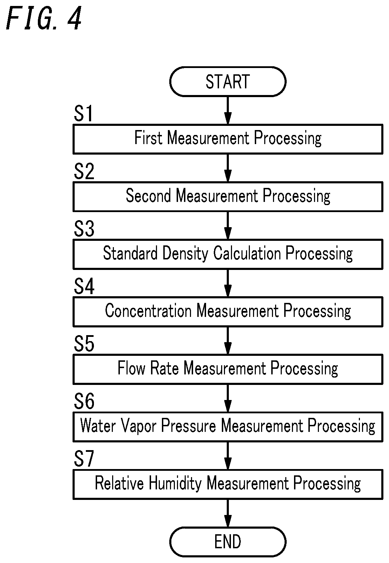

First, an overview of the operation of the physical quantity measurement system 1 will be described with reference to FIG. 4.

The first signal processor 201 performs first measurement processing (in Step S1). Specifically, the first signal processor 201 measures a first propagation time tᵤₚ of an ultrasonic wave transmitted from the first ultrasonic transducer 11 toward the second ultrasonic transducer 12. In addition, the first signal processor 201 also measures a second propagation time t_{dw} of an ultrasonic wave transmitted from the second ultrasonic transducer 12 toward the first ultrasonic transducer 11. Furthermore, the first signal processor 201 calculates a propagation time t as an average value of the first propagation time tᵤₚ and the second propagation time t_{dw}.

The second signal processor 202 performs second measurement processing (in Step S2). Specifically, the second signal processor 202 obtains, based on the output signal of the pressure sensor 13, the pressure P measured by the pressure sensor 13. The second signal processor 202 obtains, based on the output signal of the temperature sensor 14, the temperature T measured by the temperature sensor 14. Furthermore, the second signal processor 202 obtains, based on the output signal of the density sensor 15, the density ρ measured by the density sensor 15.

The converter 203 performs standard density calculation processing (in Step S3). The converter 203 converts the density ρ into a standard density ρ₀ by the Mathematical Expression 1 using the density ρ, temperature T, and pressure P that have been obtained through the second measurement processing.

The concentration measurer 204 performs concentration measurement processing (in Step S4). The concentration measurer 204 measures a water vapor concentration x_{w} as the concentration of water vapor and a gas concentration as the concentration of a gas included in the gas mixtures which is different from the water vapor. In this embodiment, the concentration measurer 204 measures the water vapor concentration x_{w} and a hydrogen concentration x. Specifically, the concentration measurer 204 calculates the gas concentration (such as the hydrogen concentration x) using the pressure P of the gas mixtures as measured by the pressure sensor 13, the density ρ measured by the density sensor 15, the temperature T measured by the temperature sensor 14, and the propagation time t of the ultrasonic wave which is obtained by causing the pair of ultrasonic transducers 11, 12 to transmit and receive the ultrasonic wave. That is to say, the concentration measurer 204 calculates the hydrogen concentration x by Mathematical Expressions 2 and 3 using the standard density ρ₀ converted through the conversion processing and the propagation time t of the ultrasonic wave. Furthermore, the concentration measurer 204 calculates the water vapor concentration x_{w} by Mathematical Expression 2 using the gas concentration (hydrogen concentration x) thus calculated and the standard density ρ₀.

The flow rate measurer 205 calculates the flow rate Q of the gas mixtures by performing flow rate measurement processing (in Step S5).

The water vapor pressure measurer 206 performs water vapor pressure measurement processing (in Step S6). The water vapor pressure measurer 206 calculates the water vapor pressure P_{w} by Mathematical Expression 6 using the pressure P obtained through the second measurement processing and the water vapor concentration x_{w} obtained through the concentration measurement processing.

The relative humidity measurer 207 performs relative humidity measurement processing (in Step S7). The relative humidity measurer 207 measures a relative humidity H of the gas mixtures based on the water vapor pressure P_{w} measured through the water vapor pressure measurement processing and a saturated water vapor pressure according to the temperature T. Specifically, the relative humidity measurer 207 calculates the relative humidity H of the gas mixtures by the following Mathematical Expression 7.

### (3.2) Concentration measurement processing

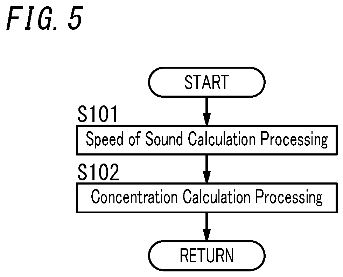

Next, the concentration measurement processing as Step S4 shown in FIG. 4 will be described with reference to FIG. 5.

The concentration measurer 204 measures the concentration x_{w} of water vapor included in the gas mixtures and a gas concentration (e.g., a hydrogen concentration x) as the concentration of a gas (e.g., hydrogen in this example) different from the water vapor by performing the concentration measurement processing.

The concentration measurer 204 performs speed of sound calculation processing (in Step S101). The concentration measurer 204 calculates a speed of sound c based on the propagation time t of the ultrasonic wave.

The concentration measurer 204 performs concentration calculation processing (in Step S102). The concentration measurer 204 calculates the hydrogen concentration x and the water vapor concentration x_{w} by Mathematical Expressions 2 and 3 using the speed of sound c calculated based on the propagation time t of the ultrasonic wave and the standard density ρ₀ converted through the conversion processing.

### (3.3) Speed of sound calculation processing

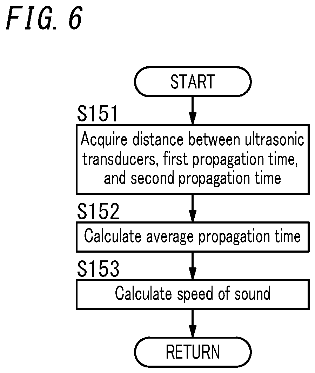

Next, the speed of sound calculation processing in Step S101 shown in FIG. 5 will be described with reference to FIG. 6.

The concentration measurer 204 acquires the gap distance L (i.e., the gap distance between the first ultrasonic transducer 11 and the second ultrasonic transducer 12) that is stored in advance and the first propagation time tᵤₚ and second propagation time t_{dw} that have been measured through the first measurement processing (in Step S151).

The concentration measurer 204 calculates a propagation time t as an average value of the first propagation time tᵤₚ and the second propagation time t_{dw} (in Step S152).

The concentration measurer 204 calculates the speed of sound c by the Mathematical Expression 3 using the gap distance L acquired in Step S151 and the propagation time t calculated in Step S152 (in Step S153).

### (3.4) Concentration calculation processing

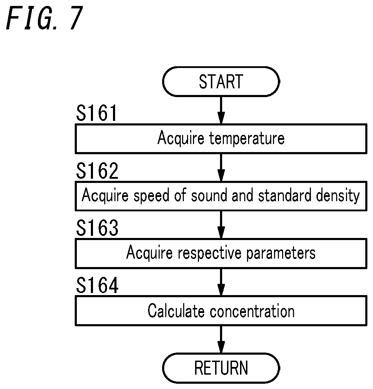

Next, the concentration calculation processing in Step S102 shown in FIG. 5 will be described with reference to FIG. 7.

The concentration measurer 204 acquires the temperature T that has been obtained through the second measurement processing (in Step S161).

The concentration measurer 204 acquires the speed of sound c calculated through the speed of sound calculation processing and the standard density ρ₀ calculated through the conversion processing (in Step S162).

The concentration measurer 204 acquires the respective parameters that have been stored in advance (in Step S163). Specifically, the concentration measurer 204 acquires, as the respective parameters, a gas constant R, the molecular weight M₁ of hydrogen (as the first molecular weight), the molecular weight M₂ of nitrogen (as the second molecular weight), the molecular weight M_{w} of water vapor (as the third molecular weight), molar heat capacities at constant pressure (cₚ₁, cₚ₂, c_{pw}) of the respective gases (namely, hydrogen, nitrogen, and water vapor), molar specific heats at constant volume (cᵥ₁, cᵥ₂, c_{vw}) of the respective gases (namely, hydrogen, nitrogen, and water vapor), and densities (ρ₁, ρ₂, ρ_{w}) of the respective gases (namely, hydrogen, nitrogen, and water vapor).

The concentration measurer 204 calculates a hydrogen concentration x and a water vapor concentration x_{w} (in Step S164). The concentration measurer 204 calculates the hydrogen concentration x and the water vapor concentration x_{w} by Mathematical Expressions 2 and 3 using the temperature T acquired in Step S161, the speed of sound c and standard density ρ₀ acquired in Step S162, and the respective parameters acquired in Step S163. Specifically, the concentration measurer 204 calculates the hydrogen concentration x by Mathematical Expressions 2 and 3 using the temperature T acquired in Step S161, the speed of sound c acquired in Step S162, and the respective parameters acquired in Step S164. Furthermore, the concentration measurer 204 calculates the water vapor concentration x_{w} by Mathematical Expression 2 using the standard density ρ₀ acquired in Step S162 and the hydrogen concentration x thus calculated.

### (3.5) Flow rate measurement processing

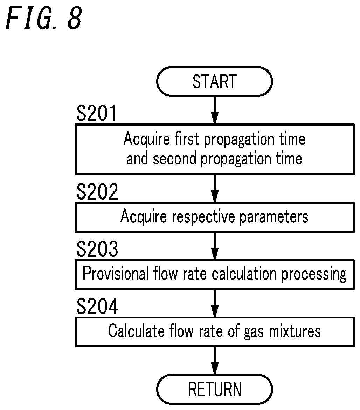

Next, the flow rate measurement processing in Step S5 shown in FIG. 4 will be described with reference to FIG. 8.

The flow rate measurer 205 acquires the first propagation time tᵤₚ and second propagation time t_{dw} that have been measured through the first measurement processing (in Step S201).

The flow rate measurer 205 acquires the respective parameters that have been stored in advance (in Step S202). Specifically, the flow rate measurer 205 acquires, as the respective parameters, the cross-sectional area S of the flow channel 101, the length L of the ultrasonic wave propagation path (i.e., the gap distance L between the first ultrasonic transducer 11 and the second ultrasonic transducer 12), the tilt angle θ formed by the ultrasonic wave propagation path 106 with respect to the flow channel 101, and the flow rate coefficient Rₖ.

The flow rate measurer 205 performs provisional flow rate calculation processing (in Step S203). Specifically, the flow rate measurer 205 calculates a provisional flow rate Q₀ by Mathematical Expression 4 using the first propagation time tᵤₚ and second propagation time t_{dw} that have been acquired in Step S201, and the cross-sectional area S, length L, and angle θ that have been acquired in Step S202.

The flow rate measurer 205 calculates a flow rate Q by Mathematical Expression 5 using the flow rate coefficient Rₖ acquired in Step S201 and the provisional flow rate Q₀ calculated in Step S203 (in Step S204).

### (4) Advantages

As can be seen from the foregoing description, a physical quantity measurement system 1 according to this embodiment includes a flow channel 101, a pair of ultrasonic transducers 11, 12, a pressure sensor 13, a temperature sensor 14, a density sensor 15, and a concentration measurer 204. Gas mixtures including hydrogen and water vapor flow through the flow channel 101. The pair of ultrasonic transducers 11, 12 transmit and receive an ultrasonic wave and are arranged to cause the ultrasonic wave to cross the flow of the gas mixtures along the flow channel 101. The pressure sensor 13 measures the pressure of the gas mixtures. The temperature sensor 14 measures the temperature of the gas mixtures. The density sensor 15 measures the density of the gas mixtures. The concentration measurer 204 measures a gas concentration as a concentration of a gas included in the gas mixtures which is different from the water vapor. The concentration measurer 204 calculates the gas concentration using the pressure of the gas mixtures as measured by the pressure sensor 13, the density measured by the density sensor 15, the temperature measured by the temperature sensor 14, and the propagation time of the ultrasonic wave which is obtained by causing the pair of ultrasonic transducers 11, 12 to transmit and receive the ultrasonic wave.

According to this configuration, the physical quantity measurement system 1 uses not only the temperature of the gas mixtures and the propagation time but also the density measured by the density sensor 15 to measure a gas concentration (e.g., the hydrogen concentration), thus allowing the gas concentration (e.g., the hydrogen concentration) to be measured accurately even in a high-humidity environment.

### (5) Variations

Next, variations will be enumerated one after another. Note that the variations to be described below may be adopted in combination as appropriate.

### (5.1) First variation

The flow channel body 10 may further include one or more partitions. The one or more partitions divide the flow channel 101 into multiple sections in a height direction (Z-direction) defined with respect to the flow channel 101. When the one or more partitions divide the flow channel 101 into multiple sections, a multilayer flow channel is formed in the flow channel 101. This configuration not only increases the aspect ratio of the flow channel cross section of each layer of the multilayer flow channel to turn the flow into a two-dimensional flow but also rectifies the flow and stabilizes the turbulence as well.

### (5.2) Second variation

The flow channel body 10 may include a plurality of temperature sensors 14. That is to say, the physical quantity measurement system 1 may include a plurality of temperature sensors 14. If the flow channel body 10 includes a plurality of temperature sensors 14, then the second signal processor 202 calculates, as the temperature T of the gas mixtures, an average value of the respective temperatures measured by the plurality of temperature sensors 14.

### (5.3) Third variation

In the embodiment described above, adopted is a configuration in which the first and second ultrasonic transducers 11, 12 are arranged at an upstream point and a downstream point, respectively, to face each other, i.e., a configuration in which the arrangement direction of the first and second ultrasonic transducers 11, 12 intersects with the X-direction. However, this configuration is only an example and should not be construed as limiting.

Alternatively, the first and second ultrasonic transducers 11, 12 may also be arranged in the X-direction, i.e., may also be arranged such that their arrangement direction does not intersect with the X-direction.

In that case, the ultrasonic wave sent out from the first ultrasonic transducer 11 is reflected inside the flow channel 101, so that the ultrasonic wave thus reflected reaches the second ultrasonic transducer 12. On the other hand, the ultrasonic wave sent out from the second ultrasonic transducer 12 is reflected inside the flow channel 101, so that the ultrasonic wave thus reflected reaches the first ultrasonic transducer 11. That is to say, the ultrasonic wave propagation path has a V-shape and crosses the flow of the gas mixtures along the flow channel 101. In other words, in this third variation, the pair of ultrasonic transducers 11, 12 are arranged such that the ultrasonic wave crosses the flow of the gas mixtures along the flow channel 101.

### (5.4) Fourth variation

According to the present disclosure, at least one of the pressure sensor 13, the temperature sensor 14, or the density sensor 15 is not an indispensable constituent element for the physical quantity measurement system 1.

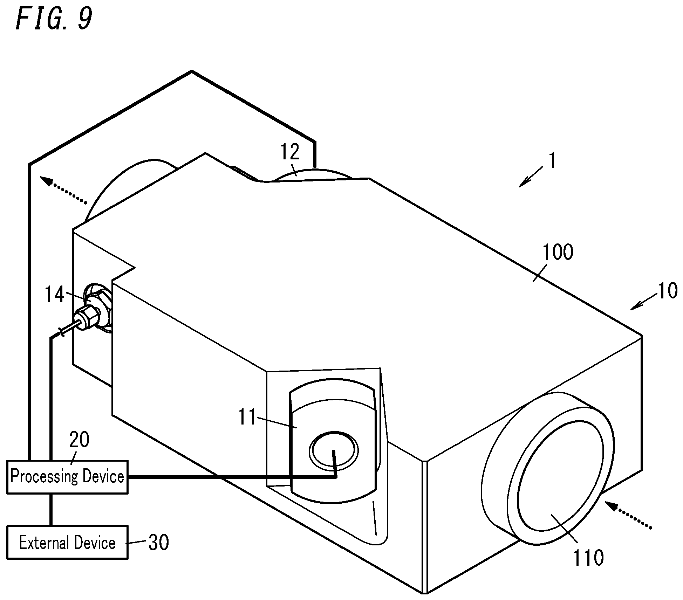

If the physical quantity measurement system 1 does not include the pressure sensor 13, then the physical quantity measurement system 1 may acquire, from the external device 30 shown in FIG. 9, the pressure of the gas mixtures flowing through the flow channel 101. That is to say, if the pressure of the gas mixtures flowing through the flow channel 101 is already known from another means, then the physical quantity measurement system 1 does not have to include the pressure sensor 13. That is to say, the physical quantity measurement system 1 may acquire, from the external device 30, the pressure of the gas mixtures flowing through the flow channel 101 which is known from another means, and use the pressure of the gas mixtures as a measured value.

If the physical quantity measurement system 1 does not include the temperature sensor 14, then the physical quantity measurement system 1 may acquire, from the external device 30, the temperature of the gas mixtures flowing through the flow channel 101. That is to say, if the temperature of the gas mixtures flowing through the flow channel 101 is already known from another means, then the physical quantity measurement system 1 does not have to include the temperature sensor 14. That is to say, the physical quantity measurement system 1 may acquire, from the external device 30, the temperature of the gas mixtures flowing through the flow channel 101 which is known from another means, and use the temperature of the gas mixtures as a measured value.

If the physical quantity measurement system 1 does not include the density sensor 15, then the physical quantity measurement system 1 may acquire, from the external device 30, the density of the gas mixtures flowing through the flow channel 101. That is to say, if the density of the gas mixtures flowing through the flow channel 101 is already known from another means, then the physical quantity measurement system 1 does not have to include the density sensor 15. That is to say, the physical quantity measurement system 1 may acquire, from the external device 30, the density of the gas mixtures flowing through the flow channel 101 which is known from another means, and use the density of the gas mixtures as a measured value.

The concentration measurer 204 of the physical quantity measurement system 1 according to the fourth variation calculates a water vapor concentration using the pressure of the gas mixtures, the density of the gas mixtures, and the temperature of the gas mixtures.

In this case, if the physical quantity measurement system 1 according to the fourth variation includes none of the pressure sensor 13, the temperature sensor 14, or the density sensor 15, then the concentration measurer 204 according to the fourth variation acquires all of the pressure of the gas mixtures, the density of the gas mixtures, and the temperature of the gas mixtures from the external device 30.

Alternatively, the physical quantity measurement system 1 according to the fourth variation may measure one or two physical quantities selected from the group consisting of the pressure of the gas mixtures, the temperature of the gas mixtures, and the density of the gas mixtures. In that case, the physical quantity measurement system 1 according to the fourth variation further includes one or two sensors for making measurements of one or two targets of measurement selected from the group consisting of the pressure of the gas mixtures, the temperature of the gas mixtures, and the density of the gas mixtures. That is to say, the physical quantity measurement system 1 according to the fourth variation further includes one or two sensors selected from the group consisting of the pressure sensor 13 for measuring the pressure of the gas mixtures, the temperature sensor 14 for measuring the temperature of the gas mixtures, and the density sensor 15 for measuring the density of the gas mixtures according to one or two targets of measurement selected from the group consisting of the pressure of the gas mixtures, the temperature of the gas mixtures, and the density of the gas mixtures. The concentration measurer 204 according to the fourth variation acquires, from an external device, non-target(s) of measurement selected from the group consisting of the pressure of the gas mixtures, the temperature of the gas mixtures, and the density of the gas mixtures. This configuration allows at least one physical quantity selected from the group consisting of the pressure of the gas mixtures, the temperature of the gas mixtures, and the density of the gas mixtures to be acquired from sensor(s) and the other parameters to be acquired from the external device.

### (Other variations)

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure.

Optionally, the functions of the physical quantity measurement system 1 may also be implemented as a physical quantity measuring method, a computer program, or a non-transitory storage medium on which a program is stored. A physical quantity measuring method according to an aspect is used in a physical quantity measurement system 1 including a flow channel 101 and a pair of ultrasonic transducers 11, 12. Gas mixtures including hydrogen and water vapor flow through the flow channel 101. The pair of ultrasonic transducers 11, 12 transmit and receive an ultrasonic wave and are arranged to cause the ultrasonic wave to cross the flow of the gas mixtures along the flow channel 101. The physical quantity measuring method includes a concentration measurement step. The concentration measurement step includes measuring a gas concentration as a concentration of a gas included in the gas mixtures which is different from the water vapor. The concentration measurement step includes calculating the gas concentration using a pressure of the gas mixtures, a density of the gas mixtures, a temperature of the gas mixtures, and a propagation time of the ultrasonic wave which is obtained by causing the pair of ultrasonic transducers 11, 12 to transmit and receive the ultrasonic wave. A program according to another aspect causes a computer system to serve as an agent that performs the physical quantity measuring method described above.

The physical quantity measurement system 1 according to the present disclosure includes a computer system. The computer system includes a processor and a memory as principal hardware components thereof. The computer system performs the functions of the physical quantity measurement system 1 according to the present disclosure by making the processor execute a program stored in the memory of the computer system. The program may be stored in advance in the memory of the computer system. Alternatively, the program may also be downloaded through a telecommunications line or be distributed after having been stored in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the physical quantity measurement system 1 are integrated together in a single housing. However, this is not an essential configuration for the physical quantity measurement system 1. Alternatively, those constituent elements of the physical quantity measurement system 1 may be distributed in multiple different housings. Still alternatively, at least some functions of the physical quantity measurement system 1 may be implemented as a cloud computing system as well.

### (Recapitulation)

As can be seen from the foregoing description, a physical quantity measurement system (1) according to a first aspect includes a flow channel (101), a pair of ultrasonic transducers (11, 12), and a concentration measurer (204). Gas mixtures including hydrogen and water vapor flow through the flow channel (101). The pair of ultrasonic transducers (11, 12) transmit and receive an ultrasonic wave and are arranged to cause the ultrasonic wave to cross the flow of the gas mixtures along the flow channel (101). The concentration measurer (204) measures a gas concentration as a concentration of a gas included in the gas mixtures which is different from the water vapor. The concentration measurer (204) calculates the gas concentration using a pressure of the gas mixtures, a density of the gas mixtures, a temperature of the gas mixtures, and a propagation time of the ultrasonic wave which is obtained by causing the pair of ultrasonic transducers (11, 12) to transmit and receive the ultrasonic wave.

According to this aspect, not only the temperature of the gas mixtures and the propagation time but also the density of the gas mixtures are used to measure a gas concentration (e.g., a hydrogen concentration), thus allowing the gas concentration (such as a hydrogen concentration) to be measured accurately even in a high-humidity environment.

A physical quantity measurement system (1) according to a second aspect, which may be implemented in conjunction with the first aspect, further includes a pressure sensor (13), a temperature sensor (14), and a density sensor (15). The pressure sensor (13) measures the pressure of the gas mixtures. The temperature sensor (14) measures the temperature of the gas mixtures. The density sensor (15) measures the density of the gas mixtures.

This aspect allows the gas concentration (such as a hydrogen concentration) to be measured accurately even in a high-humidity environment.

A physical quantity measurement system (1) according to a third aspect, which may be implemented in conjunction with the first aspect, further includes one or two sensors that make measurements of one or two targets of measurement selected from the group consisting of the pressure of the gas mixtures, the temperature of the gas mixtures, and the density of the gas mixtures. The concentration measurer (204) acquires, from an external device, any non-target of measurement selected from the group consisting of the pressure of the gas mixtures, the temperature of the gas mixtures, and the density of the gas mixtures.

This aspect allows the gas concentration (such as a hydrogen concentration) to be measured accurately even in a high-humidity environment.

A physical quantity measurement system (1) according to a fourth aspect, which may be implemented in conjunction with any one of the first to third aspects, further includes a converter (203). The converter (203) converts, using the pressure and temperature of the gas mixtures, the density of the gas mixtures into a standard density which is a density of the gas mixtures in a standard condition. The concentration measurer (204) calculates the gas concentration using the standard density and the propagation time of the ultrasonic wave which is obtained by causing the pair of ultrasonic transducers (11, 12) to transmit and receive the ultrasonic wave.

This aspect allows the gas concentration (such as a hydrogen concentration) to be measured accurately even in a high-humidity environment.

A physical quantity measurement system (1) according to a fifth aspect, which may be implemented in conjunction with any one of the first to fourth aspects, further includes a water vapor pressure measurer (206). The water vapor pressure measurer (206) measures a water vapor pressure of the water vapor. The concentration measurer (204) further calculates a water vapor concentration as a concentration of the water vapor using the pressure of the gas mixtures, the density of the gas mixtures, the temperature of the gas mixtures, and the gas concentration. The water vapor pressure measurer (206) calculates the water vapor pressure using the water vapor concentration and the pressure of the gas mixtures.

This aspect allows the water vapor pressure to be measured accurately.

A physical quantity measurement system (1) according to a sixth aspect, which may be implemented in conjunction with the fifth aspect, further includes a relative humidity measurer (207). The relative humidity measurer (207) measures a relative humidity of the gas mixtures based on the water vapor pressure and a saturated water vapor pressure according to the temperature.

According to this aspect, the relative humidity of the gas mixtures is measured using the water vapor pressure measured by the water vapor pressure measurer (206), thus allowing the relative humidity of the gas mixtures to be measured more accurately.

A physical quantity measurement system (1) according to a seventh aspect, which may be implemented in conjunction with any one of the first to sixth aspects, further includes a flow rate measurer (205). The flow rate measurer (205) measures a flow rate of the gas mixtures flowing through the flow channel (101) using: a first propagation time of the ultrasonic wave transmitted from a first ultrasonic transducer (11) belonging to the pair of ultrasonic transducers (11, 12) toward a second ultrasonic transducer (12) belonging to the pair of ultrasonic transducers (11, 12); and a second propagation time of the ultrasonic wave transmitted from the second ultrasonic transducer (12) toward the first ultrasonic transducer (11).

This aspect allows the flow rate of the gas mixtures to be measured accurately.

### Reference Signs List

- 1: Physical Quantity Measurement System
- 11: Ultrasonic Transducer (First Ultrasonic Transducer)

- 12: Ultrasonic Transducer (Second Ultrasonic Transducer)
- 13: Pressure Sensor
- 14: Temperature Sensor
- 15: Density Sensor
- 20: Processing Device
- 101: Flow Channel
- 203: Converter
- 204: Concentration Measurer
- 205: Flow Rate Measurer
- 206: Water Vapor Pressure Measurer
- 207: Relative Humidity Measurer

## Claims

1. A physical quantity measurement system comprising:
a flow channel, through which gas mixtures including hydrogen and water vapor flow;
a pair of ultrasonic transducers configured to transmit and receive an ultrasonic wave and arranged to cause the ultrasonic wave to cross a flow of the gas mixtures along the flow channel; and
a concentration measurer configured to measure a gas concentration, the gas concentration being a concentration of a gas included in the gas mixtures which is different from the water vapor,
the concentration measurer being configured to calculate the gas concentration using a pressure of the gas mixtures, a density of the gas mixtures, a temperature of the gas mixtures, and a propagation time of the ultrasonic wave which is obtained by causing the pair of ultrasonic transducers to transmit and receive the ultrasonic wave.

2. The physical quantity measurement system of claim 1, further comprising:
a pressure sensor configured to measure the pressure of the gas mixtures;
a temperature sensor configured to measure the temperature of the gas mixtures; and
a density sensor configured to measure the density of the gas mixtures.

3. The physical quantity measurement system of claim 1, further comprising
one or two sensors configured to make measurements of one or two targets of measurement selected from the group consisting of the pressure of the gas mixtures, the temperature of the gas mixtures, and the density of the gas mixtures, wherein
the concentration measurer is configured to acquire, from an external device, any non-target of measurement selected from the group consisting of the pressure of the gas mixtures, the temperature of the gas mixtures, and the density of the gas mixtures.

4. The physical quantity measurement system of any one of claims 1 to 3, further comprising a converter configured to convert, using the pressure and the temperature of the gas mixtures, the density of the gas mixtures into a standard density, the standard density being a density of the gas mixtures in a standard condition, wherein
the concentration measurer is configured to calculate the gas concentration using the standard density and the propagation time of the ultrasonic wave which is obtained by causing the pair of ultrasonic transducers to transmit and receive the ultrasonic wave.

5. The physical quantity measurement system of any one of claims 1 to 4, further comprising a water vapor pressure measurer configured to measure a water vapor pressure of the water vapor, wherein
the concentration measurer is configured to further calculate a water vapor concentration as a concentration of the water vapor using the pressure of the gas mixtures, the density of the gas mixtures, the temperature of the gas mixtures, and the gas concentration, and
the water vapor pressure measurer is configured to calculate the water vapor pressure of the water vapor using the water vapor concentration and the pressure of the gas mixtures.

6. The physical quantity measurement system of claim 5, further comprising a relative humidity measurer configured to measure a relative humidity of the gas mixtures based on the water vapor pressure and a saturated water vapor pressure according to the temperature.

7. The physical quantity measurement system of any one of claims 1 to 6, further comprising a flow rate measurer configured to measure a flow rate of the gas mixtures flowing through the flow channel using: a first propagation time of the ultrasonic wave transmitted from a first ultrasonic transducer belonging to the pair of ultrasonic transducers toward a second ultrasonic transducer belonging to the pair of ultrasonic transducers; and a second propagation time of the ultrasonic wave transmitted from the second ultrasonic transducer toward the first ultrasonic transducer.
